# EUROPEAN PATENT APPLICATION

(11) **EP 2 613 010 A1**
(43) Date of publication of application: **10.07.2013**
(21) Application number: 12198761.4
(22) Date of filing: 20.12.2012
(51) Int. Cl.: F01D 11/00

(54) **Double ended brush seal assembly for a compressor**

(30) Priority: 04.01.2012 US 201213343052
(71) Applicant: General Electric Company, Schenectady, NY 12345 (US)
(72) Inventor: Sha, Karimulla Shaik, 560066 Karnataka (IN)
(74) Representative: Cleary, Fidelma

(57) **Abstract**

A system having an axial brush seal assembly is (54) provided, having a first component, a second component, at least two plates (76, 78) that generally oppose one another, a plurality of seal bristles (80), and a base plate (82). The first component has a first sealing surface (70). The second component has a second sealing surface (72). The plurality of seal bristles (80) are received between the at least two plates (76, 78). The plurality of seal bristles (80) include a first end portion (84) and a second end portion (86). The first end portion (84) is configured to selectively seal against the first sealing surface (70) and the second end portion (86) is configured to selectively seal against the second sealing surface (72). At least one of the at least two plates (76, 78) is connected to the base plate (82), and the base plate supports the brush seal assembly (54). The axial brush seal assembly (54) provides sealing for two leakage paths (A, B) simultaneously.

## Description

### BACKGROUND OF THE INVENTION

The subject matter disclosed herein relates to a system having an axial brush seal assembly, and more specifically to an axial brush seal assembly supported by a base plate and having a plurality of seal bristles with a first end portion and a second end portion.

Gas turbines generally include a compressor, a combustor, one or more fuel nozzles, and a turbine. Air enters the gas turbine through an air intake and is compressed by the compressor. The compressed air is then mixed with fuel supplied by the fuel nozzles. The air-fuel mixture is supplied to the combustors at a specified ratio for combustion. The combustion generates pressurized exhaust gases, which drive blades of the turbine.

The compressor typically includes at least one rotor assembly and at least one stator assembly. The stator assembly generally includes a plurality of vane segments arranged in an annular configuration around a rotational axis of the compressor. The vane segments are arranged between an inner stator vane shroud ring and an outer support. The stator vanes are employed for guiding core gas flow in and out of the rotor assembly. Core gas flow is typically the gas exiting the compressor passing directly though the combustor and into the turbine.

In an effort to improve efficiency of the gas turbine and reduce aerodynamic performance losses, gas flow leakage located in the area around the stator vanes and the rotor is usually limited by the use of seals. However, there are typically multiple leak paths that exist in the area around the stator vanes and the rotor. For example, gas flow may leak into the main gas flow area of the compressor, which in turn creates aerodynamic performance losses. Gas flow may also leak into a high pressure packing (HPP) region of the compressor, which may reduce compressor efficiency. Providing multiple seals for the leak paths in the compressor may become costly and complex. Therefore, it would be desirable to provide a sealing assembly that effectively seals multiple leakage paths in a compressor.

### BRIEF DESCRIPTION OF THE INVENTION

According to one aspect of the invention, a system having an axial brush seal assembly is provided having a first component, a second component, at least two annular plates that generally oppose one another, a plurality of seal bristles, and a base plate. The first component has a first sealing surface. The second component has a second sealing surface. The plurality of seal bristles are received between the at least two annular plates. The plurality of seal bristles include a first end portion and a second end portion. The first end portion is configured to selectively seal against the first sealing surface and the second end portion is configured to selectively seal against the second sealing surface. At least one of the at least two annular plates is connected to the base plate, and the base plate supports the axial brush seal assembly.

According to another aspect of the invention, compressor for a turbine is provided. The turbine includes a rotor having a rotor sealing surface. The turbine includes a stator vane connected to an outer static casing and a stator vane shroud ring having a shroud ring sealing surface. The turbine also includes an axial brush seal assembly connected to an inner static casing for providing sealing between the rotor and the inner static casing and the stator vane and the inner static casing, which is a generally static seal. The brush sealing assembly includes at least two annular plates that generally oppose one another, a plurality of seal bristles, and a base plate. The plurality of seal bristles are received between the at least two annular plates. The plurality of seal bristles include a first end portion and a second end portion. The first end portion is configured to seal against the rotor sealing surface and the second end portion is configured to seal against the shroud ring sealing surface. At least one of the at least two annular plates is connected to the base plate, and the base plate supports the axial brush seal assembly in relation to the rotor and the stator vane.

According to yet another aspect of the invention, a compressor for a turbine is provided. The turbine includes first stator vane connected to an outer static casing and a first shroud ring having a first shroud ring sealing surface. The turbine includes a second stator vane connected to the outer static casing and a second stator vane shroud ring having a second shroud ring sealing surface. The turbine also includes an axial brush seal assembly connected to an inner static casing. The axial brush seal assembly seals between the first stator vane shroud ring and the inner static casing and the second stator vane shroud ring and the inner static casing, where a seal between the second stator vane shroud ring is a generally static seal. The axial brush seal assembly includes at least two annular plates that generally oppose one another. The axial brush seal assembly also includes a plurality of seal bristles received between the at least two annular plates. The seal bristles include a first end portion and a second end portion. The first end portion is configured to seal against the first shroud ring sealing surface and the second end portion is configured to seal against the second shroud ring sealing surface. The axial brush seal assembly also includes a base plate, where at least one of the at least two annular plates is connected to the base plate. The base plate supports the axial brush seal assembly in relation to the first stator vane shroud ring and the second stator vane shroud ring.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an exemplary gas turbine system having a compressor;
FIG. 2 is an enlarged view of the compressor shown in FIG. 1 exit region, where an axially oriented brush seal assembly seals against a stator vane and a rotor;
FIG. 3 is a top view of the axially oriented brush seal of FIG. 2;
FIG. 4 is an alternative embodiment of the axial brush seal assembly shown in FIG. 3;
FIG. 5 is an alternative embodiment of the axial brush seal assembly shown in FIG. 2 with the bristles canted or slanted in a circumferential direction;
FIG. 6 illustrates an axially oriented brush seal assembly that seals against two stator vanes;
FIG. 7 is an alternative embodiment of the axial brush seal assembly shown in FIG. 6;
FIG. 8 is another embodiment of the axial brush seal assembly shown in FIG. 6; and
FIG. 9 is yet another embodiment of the axial brush seal assembly shown in FIG. 6.

The detailed description explains embodiments of the invention, together with advantages and features, by way of example with reference to the drawings.

### DETAILED DESCRIPTION OF THE INVENTION

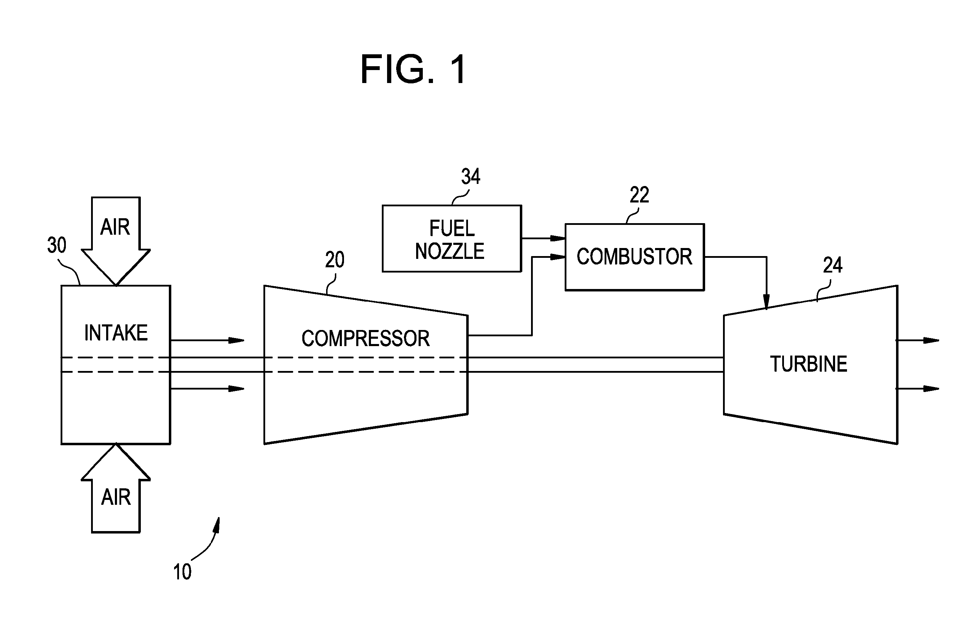

FIG. 1 illustrates a schematic exemplary power generation system indicated by reference number 10. The power generation system 10 is a gas turbine system having a compressor 20 (shown in FIG. 1), a combustor 22, and a turbine 24. Air enters the power generation system 10 though an air intake 30 connected to the compressor 20 (shown in FIG. 1), and is compressed by the compressor 20 (shown in FIG. 1). The compressed air is then mixed with fuel by a fuel nozzle 34. The fuel nozzle 34 injects an air-fuel mixture into the combustor 22 in a specific ratio for combustion. The combustion generates hot pressurized air exhaust that drives blades (not shown) that are located within the turbine 24.

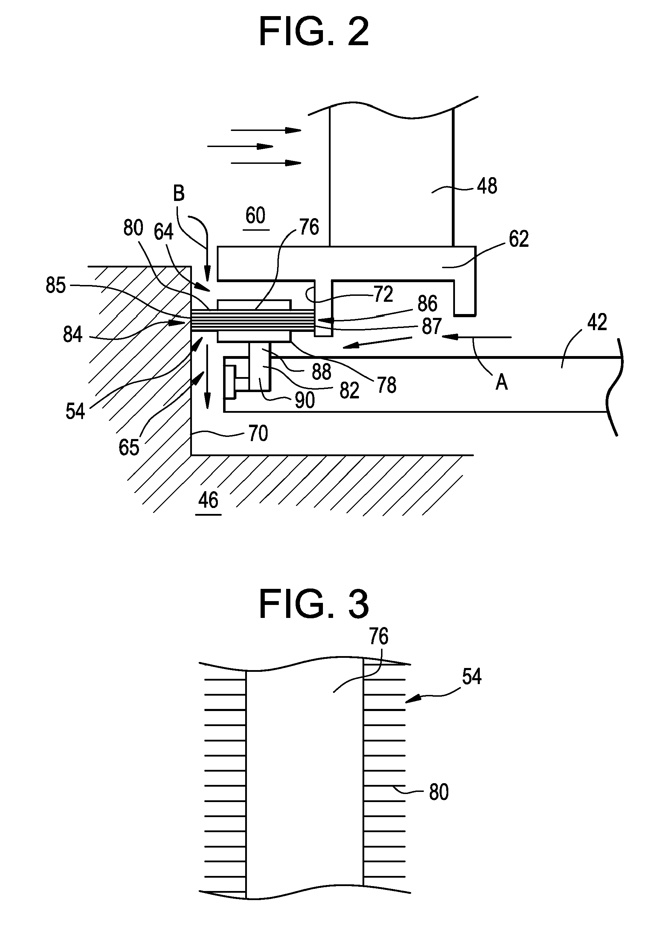

FIGS. 2-3 illustrates an axial brush seal assembly 54 situated between a rotor 46 and a compressor discharge case inner barrel 42 of the compressor 20 (shown in FIG. 1). The axial brush seal assembly 54 is provided for reducing or preventing leakage of gas flow into a core gas flow area 60 or a high pressure packing (HPP) region 64 during operation of the gas turbine system 10. Although FIG. 2 illustrates the axial brush seal assembly 54 located in the compressor 20 (shown in FIG. 1) between one of the rotor 46 and the compressor discharge case inner barrel 42, it is understood that the axial brush seal assembly 54 may be used in other applications as well where a seal is needed in more than one location.

In the embodiment as shown in FIG. 2, the axial brush seal assembly 54 substantially prevents a first leak path A from entering into the core gas flow area 60. The first leak path A is created by the axial gap and a radial gap between the compressor discharge case inner barrel 42 and a stator vane shroud ring 62. The first leak path A generally opposes the direction of the flow located in the core gas flow area 60. If the first leak path A enters the core gas flow area 60, the aerodynamic performance of the compressor 20 (shown in FIG. 1) may be affected. A second leak path B is located between the core gas flow area 60 and an upstream HPP region 64. The upstream HPP region 64 represents an area in the compressor 20 (shown in FIG. 1) where the gas flow is typically in a fully compressed state. The axial brush seal assembly 54 substantially prevents the second leak path B from entering a downstream HPP region 65 of the compressor 20 (shown in FIG. 1). Allowing the second leak path B to enter the downstream HPP region 65 may degrade compressor efficiency.

The axial brush seal assembly 54 seals against two different sealing surfaces. A first sealing surface 70 is provided that is an outer surface of the compressor rotor 46. A second sealing surface 72 is also provided that is an outer surface of the stator vane shroud ring 62. The stator vane shroud ring 62 provides support to the last stage or exit stage stator vane 48. The axial brush seal assembly 54 also includes at least two different generally annular rings or annular plates illustrated as a first plate 76 and a second plate 78, a plurality of seal bristles 80, and a base plate 82. In the embodiment as illustrated, the first plate 76 is positioned above the second plate 78. The first and second annular plates 76, 78 are configured to receive the seal bristles 80. The seal bristles 80 are typically constructed from stainless steel, Haynes® 25 alloy, or a nickel-cobalt alloy, however it is understood that other materials may be used as well.

The seal bristles 80 have a first end portion 84 and a second end portion 86. The first end portion 84 is configured to seal against the first sealing surface 70 of the compressor rotor 46 and the second end portion 86 is configured to seal against the second sealing surface 72 of the stator vane shroud ring 62. Specifically, the second end portion 86 selectively makes contact with the second sealing surface 72 of the stator vane shroud ring 62 to substantially prevent the first leak path A from entering the core gas flow area 60 during operation of the compressor 20 (shown in FIG. 1). In the embodiment as illustrated, the second end portion 86 includes a second end face 87 that selectively makes contact with the second sealing surface 72 during operation of the compressor 20 (shown in FIG. 1). The first end portion seals against the first sealing surface 70 of the compressor rotor 46 to substantially prevent the second leak path B from entering the HPP region 62. In the embodiment as illustrated, the first end portion 84 includes a first end face 85 that seals against the first sealing surface 70 during steady-state operating conditions of the compressor 20 (shown in FIG. 1).

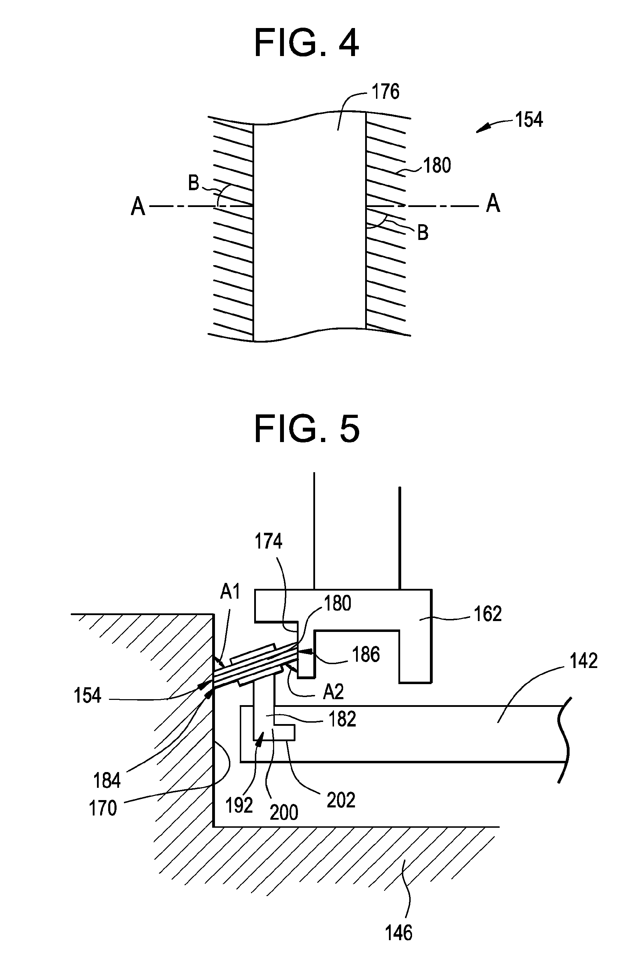

In the embodiment as shown in FIG. 2, the axial brush seal assembly 54 is supported by the base plate 82, where the base plate 82 is a generally rigid member. Specifically, FIG. 2 illustrates the second plate 78 connected to a first end 88 of the base plate 82, however it is understood that the base plate 82 could also be connected to the first plate 76 as well. A second end 90 of the base plate 82 is connected to and anchored by the compressor discharge case inner barrel 42. In the exemplary embodiment as shown, the base plate 82 is attached to the compressor discharge case 42 by a bolted connection 92, however it is understood that other approaches may be used as well to attach the base plate 82 to the compressor discharge case 42. For example, FIG. 4 illustrates a hook 192 to attach the base plate 182 to the compressor discharge case inner barrel 42.

The axial brush seal assembly 54 includes a generally annular configuration. In one embodiment, the axial brush seal assembly 54 may include a segmented design, where the plurality of seal bristles 54 are segmented into discrete portions around the circumference of the axial brush seal assembly 54 to facilitate assembly of the axial brush seal assembly 54 with the compressor 20 (shown in FIG. 1). The axial brush seal assembly 54 may include any number of brush seal bristle segments, such as, for example, two discrete segment, four discrete segments, six discrete segment, or eight discrete segments.

In one embodiment, the seal bristles 80 seal against both the first sealing surface 70 of the compressor rotor 46 and the second sealing surface 72 of the stator vane shroud ring 62 to achieve hot condition line-on-line design at steady-state full load conditions of the compressor 20 (shown in FIG. 1). That is, the first end face 85 of the first end portion 84 of the seal bristles 80 contacts the first sealing surface 70 of the compressor rotor 46, and the second end face 87 of the second end portion 86 of the seal bristles 80 contact against the second sealing surface 72 of the stator vane shroud ring 62 during steady-state full load conditions of the compressor 20 (shown in FIG. 1). This ensures that there is minimal or a negligible amount of leakage at the first and second end portions 84 and 86 of the seal bristles 80. Moreover, in another embodiment, the second end portion 86 of the seal bristles 80 have a cold build interference with the second sealing surface 72 of the stator vane shroud ring 62 for static sealing during assembly conditions. That is, the second end portion 86 of the seal bristles 80 have an interference with the second sealing surface 72 during cold assembly conditions, which are typically below about 50°C. In one embodiment, the amount of interference is about 0.2 centimeters, however it is understood that the amount of interference is variable, and depends on the amount of relative axial displacement between the stator vane shroud ring 62 and the compressor discharge case inner barrel 42.

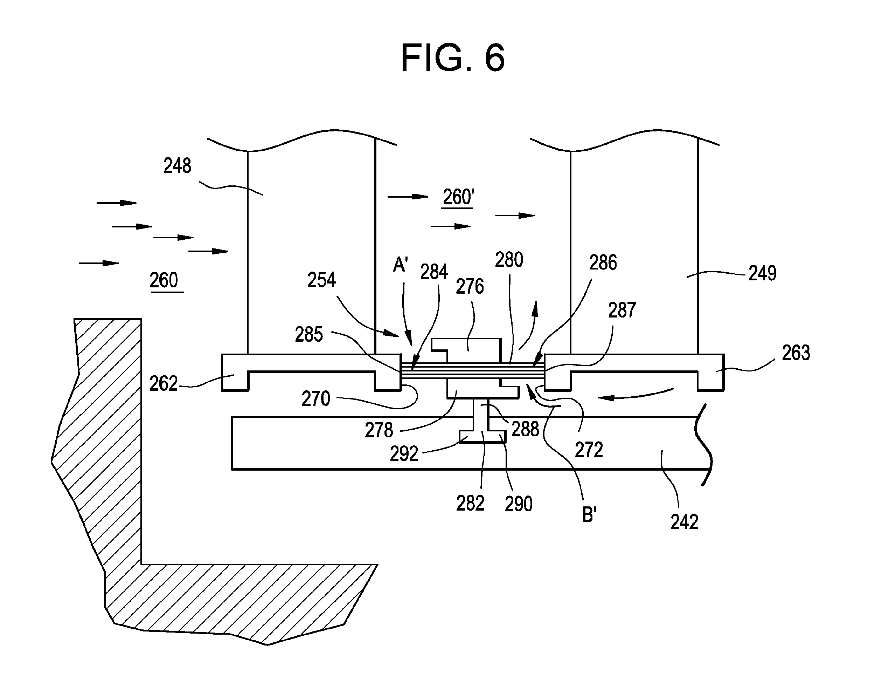

FIGS. 2-3 illustrates the seal bristles 80 of the axial brush seal assembly 54 oriented to be substantially horizontal such that the seal bristles 80 are generally parallel with the compressor 20 (shown in FIG. 1). However, it is understood that the plurality of seal bristles 80 may be angled or tilted as well. In both the embodiments shown in FIGS. 2-5, the axial brush seal assembly 54 is located between the compressor rotor 46 and one of the stator vanes 48, however, it is understood that the axial brush seal assembly 54 may be situated in other locations within a compressor exit stage portion of the compressor 20 (shown in FIG. 1) as well. For example, FIG. 6 is an alternative embodiment of an axial brush seal assembly 254 located between two stator vanes 248 and 249, which are generally the last and exit stage vanes of the compressor 20 (shown in FIG. 1). The axial brush seal assembly 254 is provided for reducing or preventing leakage of gas flow located between the stator vane shroud rings 262 and a compressor discharge case inner barrel 242 from entering into a core gas flow area 260. Specifically, in the embodiment as shown in FIG. 6, the axial brush seal assembly 254 substantially prevents a first leak path A' from entering into the core gas flow area 260. The first leak path A' is located between two of the stator vane shroud rings 262 and inner barrel 242. A second leak path B' is located between the compressor discharge case inner barrel 242 and the stator vane shroud rings 262 and 263. The axial brush seal assembly 254 substantially prevents the second leak path B' from entering into the core gas flow area 260'. The first and second leak paths A' and B' both flow in a direction that generally opposes the flow located in the core gas flow area 260 and 260'.

The axial brush seal assembly 254 seals against two different sealing surfaces. A first sealing surface 270 is provided that is an outer surface of one of the stator vane shroud rings 262, and second sealing surface 272 is also provided that is an outer surface of another stator vane shroud ring 263. The axial brush seal assembly 254 includes at least two annular plates that are illustrated as a first plate 276 and a second plate 278, a plurality of seal bristles 280, and a base plate 282. The first plate 276 is positioned above the second plate 278, where the first and second annular plates 276, 278 are configured to receive the seal bristles 280. The seal bristles 280 have a first end portion 284 and a second end portion 286. The first end portion 284 is configured to seal against the first sealing surface 270 of one of the stator vane shroud rings 262, and the second end portion 286 is configured to seal against the second sealing surface 272 of another one of the stator vane shroud rings 263. In the embodiment as shown, the first end portion 284 seals against the first sealing surface 270 to substantially prevent the first leak path A' from entering the core gas flow 260, and the second end portion 286 seals against the second sealing surface 272 to substantially prevent the second leak path B' from entering the core gas flow area 260'. Specifically, the first end portion 284 of the sealing bristles 280 includes a first end face 285 that selectively makes contact with and seals against the first sealing surface 270, and the second end portion 286 includes a second end face 287 that makes selectively contact with and seals against the second sealing surface 272 during operating conditions of the compressor 20 (shown in FIG. 1).

In the embodiment as shown in FIG. 6, the axial brush seal assembly 254 is supported by the base plate 282. Specifically, the second plate 278 is connected to a first end 288 of the base plate 282, and a second end 290 of the base plate 282 is connected to the compressor discharge case inner barrel 242. In the exemplary embodiment as shown, the base plate 282 is attached to the compressor discharge case 242 by a bolted or hooked connection 292, however it is understood that other approaches may be used as well to attach the base plate 282 to the compressor discharge case 242.

Turning back to FIG. 5, an axial brush seal assembly 154 is illustrated having tilted seal bristles 180. The seal bristles 180 are tilted with respect to a compressor rotor 146. Specifically, the seal bristles 180 are tilted such that a first end portion 184 of the seal bristles 180 is tilted at a first angle A1. The first angle A1 is measured between the first sealing surface 170 and the seal bristles 180, and generally opposes a second angle A2. The second angle A2 represents the tilting angle of a second end portion 186, and is measured between the second sealing surface 174 and the seal bristles 180. The first end portion 184 is configured to seal against a first sealing surface 170 of a compressor rotor 146 and the second end portion 186 is configured to seal against a second sealing surface 174 of a stator vane shroud ring 162. FIG. 4 illustrates the seal bristles 180 circumferentially canted at an angle B with respect to an axis A-A.

Referring to FIG. 5, base plate 182 of the axial brush seal assembly 154 is attached to the compressor discharge case inner barrel 142 by the hook 192. Specifically, an end 200 of the base plate 182 terminates as the hook 192, where the hook 192 is received by a corresponding slot 202 that is located within the compressor discharge case inner barrel 142.

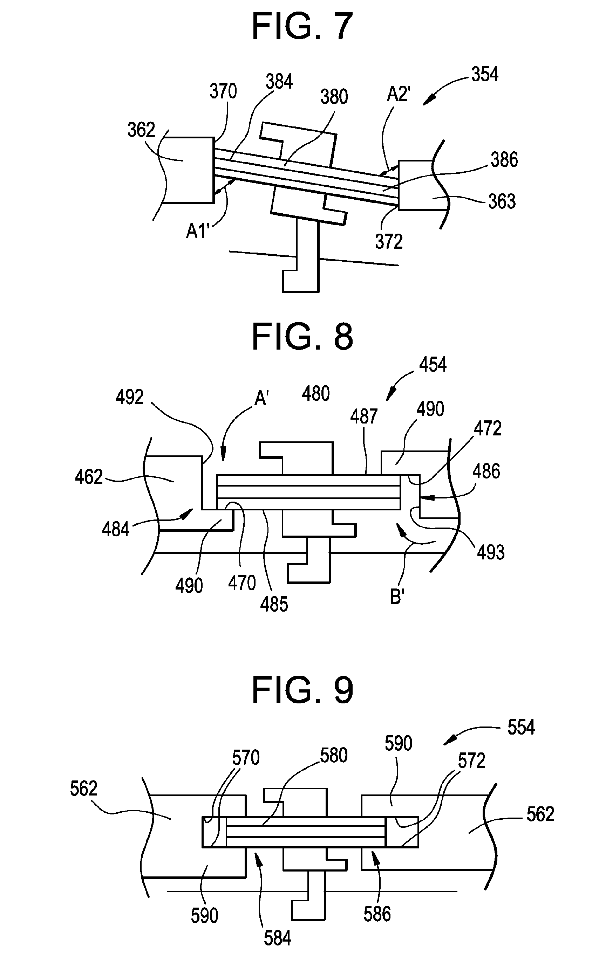

FIG. 6 illustrates the seal bristles 280 of the axial brush seal assembly 254 generally parallel with an axial axis of the compressor 20 (shown in FIG. 1), where the seal bristles are oriented to be substantially horizontal. However, it is understood that the plurality of seal bristles 280 may be tilted as well. Turning now to FIG. 7, an axial brush seal assembly 354 is illustrated having tilted seal bristles 380. The seal bristles 380 are tilted with respect to a vertical axis of the compressor 20 (shown in FIG. 1).

Specifically, the seal bristles 380 are tilted such that a first end portion 384 of the seal bristles 380 is tilted at a first angle A1'. The first angle A1' is measured between the first sealing surface 370 and the seal bristles 380, and generally opposes a second angle A2'. The second angle A2' represents the tilting angle of a second end portion 386, and is measured between the second sealing surface 372 and the seal bristles 380. The second angle A2' represents the tilting angle of a second end portion 386. The first end portion 384 of the seal bristles 380 are configured to seal against the first sealing surface 370 of one of the stator vane shroud rings 362 and the second end portion 386 of the seal bristles 380 are configured to seal against the second sealing surface 372 of a stator vane shroud ring 363.

In yet another embodiment shown in FIG. 8, the stator vane shroud rings 462 each include a tip support feature 490 that is oriented in the direction of the pressure drop created by the leak paths A' and B'. The tip support features 490 project outwardly from the surface 493 of the stator vane ring shroud (not shown in FIG. 8) and the other tip support features 490 project inwardly from a surface 492 of the stator vane shroud rind 462 A first one of the tip support features 490 include a first sealing surface 470 that seals against a first end portion 484 of the seal bristles 480 to substantially prevent a first leak path A' from entering into the core gas flow area 260 (shown in FIG. 6). Specifically, the pressure drop created by the first leak path A' causes the first end portion 484 of the seal bristles 480 to abut against the first sealing surface 470 of the tip support feature 490. The other tip support features 490 include a second sealing surface 472 that seals against a second end portion 486 of the seal bristles 480 to substantially prevent a second leak path B' from entering into the core gas flow area 260' (shown in FIG. 6). The pressure drop created by the second leak path B' causes the second end portion 486 of the seal bristles 480 to abut against the second sealing surface 472 of the tip support feature 493. Specifically, the tip support features 490 are oriented such that an lower surface 485 of the sealing bristles 480 makes contact with and seals against the first sealing surface 470, and an upper surface 487 of the sealing bristles 480 makes contact with and seals against the second sealing surface 472 during steady-state full speed operating conditions of the compressor 20 (shown in FIG. 1).

Although FIG. 8 illustrates the tip support features 490 oriented in the direction of the pressure drop created by the leak paths A', B', it is understood that the tip support features 490 could include different configurations as well, where one or both of the stator vane shroud rings 462 and 463 could include multiple tip support features. It is also understood that one of the stator vane shroud rings 462 may include a tip support feature 490, while the other shroud vane stator ring 463 does not include a tip support feature 490. FIG. 9 is yet another embodiment of an axial brush seal assembly 554 where each of the stator vane shroud rings 562 includes multiple tip support features 590. The tip support features 590 located on one of the stator vane shroud rings 562 each include a first sealing surface 570 that both seal against a first end portion 584 of the seal bristles 580. The tip support features 590 located on the other one of the stator vane shroud rings 562 include a second sealing surface 572 that seals against a second end portion 586 of the seal bristles 580.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system having an axial brush seal assembly for providing sealing to two leakage paths, comprising:
a first component having a first sealing surface;
a second component having a second sealing surface;
at least two plates that generally oppose one another;
a plurality of seal bristles received between the at least two plates, the plurality of seal bristles including a first end portion and a second end portion, the first end portion configured for selectively sealing against the first sealing surface and the second end portion configured for selectively sealing against the second sealing surface; and
a base plate for supporting the axial brush seal assembly, the base plate connected to at least one of the at least two plates.

2. The axial brush seal assembly of claim 1, wherein the first end portion of the plurality of seal bristles includes a first end face that selectively contacts the first sealing surface, and the second end portion of the plurality of seal bristles includes a second end face that selectively contacts the second sealing surface.

3. The axial brush seal assembly of claim 1 or claim 2, wherein the first component includes at least one first tip support feature and the second component includes at least one second tip support feature, wherein the first and second at least one tip support features are protrusions that project outwardly from the first and second components.

4. The axial brush seal assembly of claim 3, wherein the at least one first tip support feature includes the first sealing surface and the at least one second tip support feature includes the second sealing surface.

5. The axial brush seal assembly of any preceding claim, wherein the second end portion of the plurality of seal bristles have a cold build interference with the second sealing surface of the second component for static sealing.

6. The axial brush seal assembly of any preceding claim, wherein the axial brush seal assembly is generally annular and includes a segmented configuration wherein the plurality of seal bristles are segmented into discrete portions around a circumference of the axial brush seal assembly.

7. The axial brush seal assembly of any preceding claim, wherein the plurality of bristles are oriented to be one of substantially horizontal and angled.

8. The axial brush seal assembly of any preceding claim, wherein the base plate is attached to a support plate by one of a bolted connection and a hook.

9. A compressor for a turbine, comprising:
a rotor having a rotor sealing surface;
a stator vane connected to an outer static casing and a stator vane shroud ring having a shroud ring sealing surface;
an axial brush seal assembly connected to an inner static casing for sealing to the rotor and the stator vane, the axial brush seal assembly providing sealing between the rotor and the inner static casing and the stator vane and the inner static casing, the axial brush seal assembly comprising:
at least two plates that generally oppose one another;
a plurality of seal bristles received between the at least two plates, the plurality of seal bristles including a first end portion and a second end portion, the first end portion configured for sealing against the rotor sealing surface and the second end portion configured for sealing against the shroud ring sealing surface; and
a base plate for supporting the axial brush seal assembly in relation to the rotor and the stator vane, the base plate connected to at least one of the at least two plates.

10. The compressor of claim 9, wherein the base plate is connected to the inner static casing of a compressor discharge case, wherein connection between the base plate and the compressor discharge case anchors the base plate, and wherein the axial brush seal assembly is axially located between the rotor and the stator vane shroud ring, and wherein the stator vane is part of one of a last stage and an exit stage of the compressor.

11. The compressor of claim 9 or claim 10, wherein the first end portion of the plurality of seal bristles includes a first end face that selectively contacts the rotor sealing surface, and the second end portion of the plurality of seal bristles includes a second end face that selectively contacts the shroud ring sealing surface.

12. The compressor of any one of claims 9 to 11, wherein the rotor includes at least one rotor tip support feature and the stator vane shroud ring includes at least one shroud ring tip support feature, wherein at least one rotor tip support feature is a protrusion that projects axially from the rotor at a radial location in a downstream region of a leak path, and wherein the at least one shroud ring tip support feature is a protrusion that projects axially from the shroud ring at the radial location in the downstream region of the leak path.

13. The compressor of claim 12, wherein the at least one rotor tip support feature includes the rotor sealing surface and the at least one shroud ring tip support feature includes the shroud ring sealing surface.

14. The compressor of any one of claims 9 to 13, wherein the second end portion of the plurality of seal bristles have an interference with the shroud ring sealing surface of the stator vane shroud ring during an assembly condition, which provides static sealing.

15. The compressor of any one of claims 9 to 14, wherein the axial brush seal assembly is generally annular and includes a segmented configuration wherein the plurality of seal bristles are segmented into discrete portions around a circumference of the axial brush seal assembly.

16. A compressor for a turbine, comprising:
a first stator vane connected to an outer static casing and a first stator vane shroud ring having a first shroud ring sealing surface;
a second stator vane connected to the outer static casing and a second stator vane shroud ring having a second shroud ring sealing surface;
an axial brush seal assembly connected to an inner static casing, the axial brush seal assembly for sealing between the first stator vane shroud ring and the inner static casing and the second stator vane shroud ring and the inner static casing, wherein the sealing is a generally static seal, comprising:
at least two plates that generally oppose one another;
a plurality of seal bristles received between the at least two plates, the plurality of seal bristles including a first end portion and a second end portion, the first end portion configured for sealing against the first shroud ring sealing surface and the second end portion configured for sealing against the second shroud ring sealing surface; and
a base plate for supporting the axial brush seal assembly in relation to the first stator vane shroud ring and the second stator vane shroud ring, the base plate connected to at least one of the at least two plates.

17. The compressor of claim 16, wherein the base plate is connected to the inner static casing of a compressor discharge case, wherein connection between the base plate and the compressor discharge case anchors the base plate, and wherein the axial brush seal assembly is axially located between the rotor and the stator vane shroud ring, and wherein the stator vane is part of one of a last stage and an exit stage of the compressor.

18. The compressor of claim 16 or claim 17, wherein the first end portion of the plurality of seal bristles includes a first end face that selectively contacts the first shroud ring sealing surface, and the second end portion of the plurality of seal bristles includes a second end face that selectively contacts the second shroud ring sealing surface.

19. The compressor of any one of claims 16 to 18, wherein the first stator vane shroud ring includes at least one first shroud ring tip support feature and the second stator vane shroud ring includes at least one second shroud ring tip support feature, wherein the at least one first shroud ring tip support feature is a protrusion that projects axially from the first stator vane shroud ring at a radial location in a downstream region of a leak path, and wherein the at least one second shroud ring tip support feature is a protrusion that projects axially from the second stator vane shroud ring at the radial location in the downstream region of the leak path.

20. The compressor of claim 19, wherein the at least one first shroud ring tip support feature includes the first shroud ring sealing surface and the at least one second shroud ring tip support feature includes the second shroud ring sealing surface.
